# DEMANDE DE BREVET EUROPEEN

(11) **EP 1 519 288 A1**
(43) Date de publication de la demande: **30.03.2005**
(21) Numéro de dépôt: 03103562.9
(22) Date de dépôt: 25.09.2003
(51) Int. Cl.: G06F 17/60, G08G 1/127

(54) **Systeme et procede de covoiturage et dispositif de communication pour la mise en oeuvre du procede**

(71) Demandeur: Nagravision S.A., 1033 Cheseaux-sur-Lausanne (CH)
(72) Inventeur: WENGER, Joel, 1295, Mies (CH)
(74) Mandataire: Wenger, Joel-Théophile

(57) **Abrégé**

L'invention concerne un système et un procédé de covoiturage, ainsi qu'un dispositif de communication portable pour la mise en oeuvre du procédé.

Le système selon l'invention comporte un centre de gestion (10) et un dispositif de communication (11) attribué à un conducteur (12) et à un passager (13). Ces dispositifs de communication ont un numéro unique d'identification et comportent des moyens de détermination (14) de leur position géographique et des moyens de transmission (15) au centre de gestion d'une position. Le centre de gestion comporte des moyens de sélection d'un conducteur pour un passager. Dans le procédé de l'invention, un utilisateur s'inscrit auprès d'un centre de gestion (10) en indiquant le numéro unique d'identification de son dispositif de communication (11). Lorsqu'un passager (13) cherche un conducteur (12), il envoie un message au centre de gestion, ce message contenant une indication de position du passager et le numéro d'identification de son dispositif de communication. Lorsqu'un conducteur accepte à prendre un passager, il envoie un message au centre de gestion, contenant une indication de position du conducteur et le numéro d'identification de son dispositif de communication. Le centre de gestion détermine pour le passager, un conducteur susceptible de le prendre. Le centre de gestion envoie un message indiquant un lieu de rendez-vous. Le dispositif de communication portable de l'invention comporte des moyens de détermination (13) de la position géographique actuelle dudit dispositif et des moyens de transmission (15) de cette position au centre de gestion. Il comporte en outre des moyens permettant d'introduire une destination et des moyens de transmission de cette destination audit centre de gestion.

## Description

La présente invention concerne un système et un procédé de covoiturage, notamment un système qui permet d'optimiser l'occupation d'un véhicule. Elle concerne également un dispositif de communication portable pour la mise en oeuvre du procédé.

Il existe actuellement des systèmes de covoiturage permettant de gérer des demandes et des offres de partage de voitures sur des trajets déterminés. Ces systèmes, souvent disponibles à partir de réseaux d'ordinateurs de grandes entreprises ou de réseaux publics tel qu'Internet, comprennent une base de données qui recense les offres de partage de voiture et une autre base de données qui recense les demandes. Dans la suite, no us nommerons le "conducteur", celui qui offre le partage de sa voiture et "passager", celui qui demande de bénéficier du partage. L'utilisateur d'un tel système, qu'il soit conducteur ou passager, peut effectuer une recherche manuelle ou éventuellement automatisée dans la base de données correcte, afin de déterminer si sa demande ou son offre peut être satisfaite. Si c'est le cas, il peut contacter la personne concernée. Si ce n'est pas le cas, il peut s'inscrire sur la base de données correspondante, en donnant les indications requises, notamment le parcours, la date, l'heure,... Il doit ensuite attendre que quelqu'un le contacte.

Certains systèmes, comme notamment celui décrit dans la demande de brevet GB 2 341 708, permettent en outre de déterminer les villes étapes d'un trajet et d'inclure des trajets partiels dans les offres de covoiturage.

Ces systèmes présentent l'inconvénient qu'il est nécessaire de s'inscrire à l'avance sur le réseau utilisé, puis d'attendre qu'une réponse à sa demande soit faite. Il nécessite donc un effort de la part de l'utilisateur qui doit également contrôler régulièrement si une offre correspond à sa demande. Il n'est pas du tout adapté à l'utilisation ponctuelle du covoiturage et n'offre aucune souplesse puisqu'il est nécessaire de s'inscrire suffisamment longtemps à l'avance pour trouver une proposition correspondant à sa demande. De plus, une fois le rendez-vous pris entre le conducteur et le passager, les conditions ne devraient pas être changées à la dernière minute par l'une des parties. Ainsi, lorsqu'un rendez-vous a été convenu, une contrainte pèse sur les utilisateurs, ce qui n'incite pas à utiliser ce système.

Un autre problème provient du fait que, pour qu'un système de covoiturage fonctionne correctement, il est nécessaire qu'un grand nombre d'utilisateurs, aussi bien des conducteurs que des passagers, participent au système, faute de quoi il ne sera pas possible de trouver une offre qui réponde à une demande. Par contre, comme les recherches dans les bases de données sont généralement effectuées en passant en revue une à une la liste des propositions, plus le nombre de propositions est grand, plus il est difficile de trouver la bonne solution. Dans certains cas, les offres et les demandes sont rédigées en langage naturel, sans utiliser des champs prédéfinis et sans séparation des offres des conducteurs et des demandes des passagers, de sorte qu'il est extrêmement laborieux de trouver une correspondance entre l'offre et la demande. Il est même possible que la correspondance entre une offre et une demande ne soit tout simplement pas détectée alors que les deux figurent dans les bases de données. En pratique, ces systèmes sont relativement peu développés et sont d'un usage laborieux.

La présente invention se propose de pallier les inconvénients des systèmes de l'art antérieur en offrant un système de covoiturage qui présente une grande souplesse d'utilisation et qui peut être mis en oeuvre même sans inscription préalable de la date et de l'heure du trajet.

Les buts de l'invention sont atteints par un système de covoiturage comportant un centre de gestion, au moins un dispositif de communication attribué à chaque conducteur et au moins un dispositif de communication attribué à chaque passager, ces dispositifs de communication ayant un numéro unique d'identification et comportant des moyens de détermination de leur position géographique, caractérisé en ce que les dispositifs de communication de chaque passager et de chaque conducteur comportent des moyens de transmission audit centre de gestion d'au moins une position géographique et en ce que le centre de gestion comporte des moyens de sélection d'au moins un conducteur pour chaque passager.

Ces buts sont également atteints par un procédé de covoiturage dans lequel :
- chaque utilisateur s'inscrit auprès d'un centre de gestion en indiquant un numéro unique d'identification d'un dispositif de communication qui lui est lié;
- lorsqu'un passager cherche un conducteur, il envoie un message audit centre de gestion, ce message contenant au moins une indication de position du passager et le numéro unique d'identification du dispositif de communication dudit passager;
- lorsqu'un conducteur accepte à prendre en charge un passager, il envoie un message audit centre de gestion, ce message contenant au moins une indication de position du conducteur et le numéro unique d'identification du dispositif de communication dudit conducteur,
- le centre de gestion détermine, pour chaque passager cherchant un conducteur, au moins un conducteur susceptible de prendre en charge un passager déterminé,
- le centre de gestion envoie un message au dispositif de communication du conducteur, ce message contenant au moins des indications d'une position géographique d'un lieu de rendez-vous.

Les buts de cette invention sont aussi atteints par un dispositif de communication portable comportant des moyens de détermination de la position géographique actuelle dudit dispositif et des moyens de transmission de cette position à un centre de gestion, caractérisé en ce qu'il comporte en outre des moyens permettant d'introduire une destination et des moyens de transmission de cette destination audit centre de gestion.

Dans le système de l'invention, il est possible d'organiser un trajet à l'avance comme dans les systèmes de l'art antérieur, mais contrairement aux systèmes existants, il n'est pas nécessaire d'attendre que le hasard fasse qu'un autre utilisateur s'inscrive pour le même trajet à la même heure. Selon l'invention, au contraire, les utilisateurs sont tenus au courant des informations qui les concernent de sorte qu'ils ne doivent pas fournir l'effort de recherche, mais doivent simplement répondre. De plus, ils ne fournissent que très peu d'informations au système, ce qui rend son utilisation beaucoup plus simple et pas du tout fastidieuse comme dans les réalisations précédentes. Ceci présente l'avantage qu'un plus grand nombre d'utilisateurs peuvent adhérer au système, ce qui augmente son intérêt et son efficacité puisque plus le nombre de participants est grand, plus les chances de trouver une offre correspondant à une demande sont grandes et plus le système est efficace. Cette efficacité ne se fait toutefois pas au détriment de la lisibilité des informations.

Il est également possible d'utiliser le système de façon "impulsive", c'est-à-dire sans indiquer à l'avance le parcours et l'heure souhaitée du voyage.

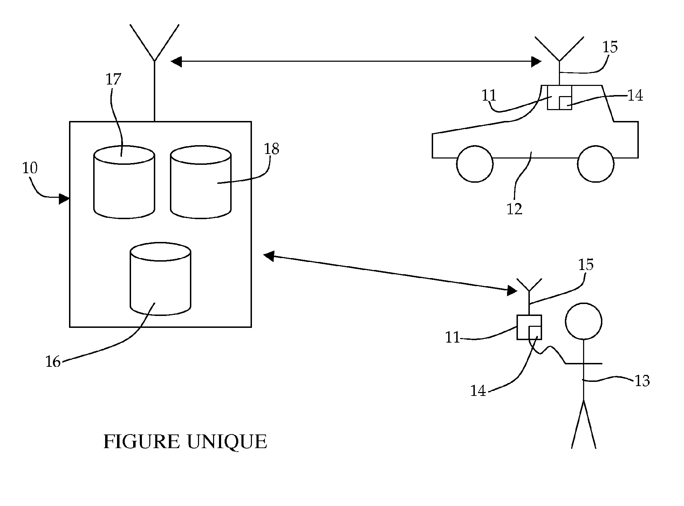

La présente invention et ses avantages seront mieux compris en référence à la description de modes de réalisation et au dessin annexé dans lequel la figure unique est une vue schématique du dispositif de l'invention.

Le système selon l'invention comporte essentiellement un centre de gestion 10 et au moins un dispositif de communication 11 attribué à chaque utilisateur, c'est-à-dire à chaque conducteur 12 et à chaque passager 13. Ce dispositif de communication peut être par exemple un téléphone portable ou un assistant personnel (PDA), ou même un dispositif développé pour cette application. Les dispositifs de communication sont destinés à établir une communication bidirectionnelle avec le centre de gestion. Cette communication bidirectionnelle peut de faire également en deux temps, soit le premier temps qui consiste à envoyer un message et un second temps qui consiste à recevoir un message. Les dispositifs comprennent tous un numéro unique d'identification qui peut par exemple être un numéro de téléphone. Les dispositifs de communication comportent également des moyens de positionnement 14 qui permettent de déterminer la position géographique du dispositif. Ces moyens peuvent être un GPS (Global positionning system) qui offre une précision de positionnement suffisante pour l'application considérée. D'autres moyens de positionnement pourraient être envisagés, comme par exemple le positionnement à partir de la mesure de la puissance de réception d'un signal de téléphonie mobile et la triangulation à partir de positions d'antennes connues. Ces moyens doivent toutefois être suffisamment précis pour offrir un positionnement ayant une marge d'incertitude de quelques mètres. Le dispositif de communication peut également comporter des moyens d'introduction d'une position et des moyens de transmission 15 de cette position au centre de gestion. L'introduction de la position, qui est généralement une destination ou un lieu de départ d'un trajet, peut se faire au moyen d'un clavier alphanumérique ou par sélection dans un menu ou par pointage sur une carte mémorisée sous forme électronique. La sélection d'un lieu par un menu permet, pour autant qu'une base de données soit prévue à cet effet, de sélectionner des lieux par centre d'intérêt ou par l'indication d'un bâtiment public et non uniquement par adresse. Ces centres d'intérêts ou bâtiments publics peuvent être des centres commerciaux, des musées, une banque, une pharmacie ou n'importe quel autre endroit qui sera facile à repérer pour un conducteur. Le dispositif de communication comporte avantageusement une mémoire qui permet de stocker les destinations les plus courantes et/ou les dernières destinations, ce qui évite dans bien des cas, la saisie répétée des données. Cette mémoire permet également de stocker les lieux de départ. De façon avantageuse, le dispositif permet de stocker un certain nombre de lieux et comporte des moyens permettant d'indiquer lors de chaque utilisation, si ce lieu doit être pris comme point de départ ou de destination du trajet.

Le centre de gestion comporte essentiellement trois bases de données, à savoir une base de données "utilisateurs" 16, une base de données "conducteurs" 17 et une base de données "passagers" 18. Dans la base de données utilisateurs, chaque utilisateur intéressé par le système de covoiturage s'inscrit en donnant des informations personnelles ainsi que le numéro unique d'identification de son dispositif de communication 11. Il peut éventuellement donner d'autres indications, notamment quel type de véhicule il utilise en tant que conducteur, s'il effectue régulièrement le même parcours, son sexe, s'il est fumeur ou non, etc. Il peut également donner des informations générales comme par exemple son lieu de domicile et son lieu de travail. Il indique également avantageusement des données de facturation tels qu'un numéro de compte bancaire pour toutes les transactions financières. Il est également possible de demander l'envoi d'une photographie qui sera stockée dans le centre de gestion. Les informations contenues dans cette base de données sont relativement statiques et ne concernent pas directement les offres et les demandes de covoiturage.

La base de données conducteurs 17 contient des indications relatives à la position géographique actuelle des conducteurs ayant indiqué qu'ils étaient prêts à prendre en charge un ou plusieurs passagers, ainsi que des indications relatives à leur destination. Les indications de position sont données par les moyens de positionnement du dispositif de communication du conducteur. Sa destination doit être introduite par le conducteur lui-même et le fait qu'il soit prêt à prendre en charge un passager est également indiqué par le conducteur. La destination peut également être sélectionnée à partir d'une mémoire du dispositif de communication. En effet, il est prouvé statistiquement que 90% des trajets sont réalisés entre des lieux habituels et donc déjà visités par le conducteur.

Cette base de données contient des informations dynamiques, puisque la position des conducteurs change au cours de leur déplacement et que leur possibilité de prendre en charge un passager varie également.

La base de données passagers 18 contient les numéros uniques d'identification du dispositif de communication attribué à chaque passager qui demande à bénéficier d'un trajet en voiture, de même que sa position actuelle donnée par les moyens de positionnement 14 et sa destination introduite par le passager lui-même. Comme la base de données conducteurs, le contenu de la base de données passagers est dynamique et doit être mis à jour fréquemment en fonction du déplacement du passager ou du fait qu'il a été pris en charge par un conducteur.

Le procédé selon l'invention peut fonctionner essentiellement de deux manières différentes. Selon une manière, les utilisateurs ne s'inscrivent pas avant d'effectuer leur parcours. Dans un deuxième mode de réalisation, les utilisateurs s'inscrivent à l'avance en indiquant le parcours.

La suite de la description est un exemple illustrant le premier mode de réalisation de l'invention, c'est-à-dire un trajet sans inscription préalable. Plus précisément, prenons l'exemple d'un passager qui souhaite effectuer un trajet déterminé d'une ville à une autre ou d'un endroit d'une ville à un autre endroit, sans avoir inscrit sa demande à l'avance.

Dans ce cas, il est possible par exemple pour un passager de commencer son trajet à pied, puis de trouver un conducteur au cours de son trajet. Le passager envoie un message au centre de gestion indiquant qu'il souhaite bénéficier d'un trajet, en indiquant sa destination. Cette destination peut être donnée au moyen de touches alphanumériques ou en choisissant la destination dans un menu ou dans la mémoire. Le message contient également la position géographique du passager ou le point de départ du trajet, ainsi que le numéro unique d'identification de son dispositif de communication. Les informations contenues dans ce message sont extraites et introduites dans des champs correspondants de la base de données passagers.

Parallèlement à ceci, tous les conducteurs qui sont prêts à prendre en charge un passager envoient un message au centre de gestion. Dans ce message, le conducteur indique simplement sa destination. Le message envoyé au centre de gestion contient en outre la position actuelle du conducteur, sa destination et le numéro unique d'identification de son dispositif de communication. L'envoi d'un tel message peut être très simple pour le conducteur. En effet, si sa destination est mémorisée, ce qui est le cas dans la grande majorité des cas, il la sélectionne, sinon, il l'introduit dans le dispositif. Une fois sélectionnées, il active simplement une touche de validation, ce qui a pour effet d'envoyer le message au centre de gestion, tout en indiquant que le conducteur est prêt à prendre en charge un passager.

Lorsqu'une demande est faite par un passager, le centre de gestion détermine, par les moyens de sélection, un groupe de conducteurs ou un conducteur susceptible de prendre en charge le passager. En pratique, les moyens de sélection vont déterminer quel est le conducteur ayant le trajet le plus adapté au passager, en tenant compte du point de départ du trajet et de la destination finale du passager et de chaque conducteur, ainsi que des étapes intermédiaires et des détours que devrait effectuer chaque conducteur pour prendre en charge ou amener le passager à destination.

De cette manière, il est toujours possible de trouver le conducteur le plus approprié pour chaque passager.

Il est également possible de définir un groupe de conducteurs sur la base de critères de tri dynamiques, tenant compte des détours que chaque conducteur devrait effectuer. Ces critères peuvent être prédéfinis, mais adaptés dynamiquement de telle sorte que le groupe de conducteurs contienne toujours par exemple entre 1 et 5 conducteurs susceptibles de prendre en charge un passager.

Lors d'un tel tri, il est également tenu compte d'éventuelles informations complémentaires données par chaque conducteur au moment de son inscription. De telles indications peuvent préciser par exemple que le détour maximal accepté est inférieur à 1 km, que le conducteur (ou la conductrice) ne souhaite prendre en charge que des passagères femmes,...Il est aussi possible de prévoir que le détour varie en fonction de la distance totale du parcours. Ainsi, un détour de 3 km est accepté pour un trajet total supérieur à 20 km par exemple, alors qu'un détour de 1 km est accepté pour les trajets plus courts.

Lorsque le conducteur a été sélectionné, le centre de gestion lui envoie ensuite un message personnel, par exemple sous forme de SMS. Ce message donne toutes les indications nécessaires permettant de fixer le rendez-vous entre le conducteur et le passager, à savoir le lieu et l'heure. Ce message peut donner des informations utiles au conducteur, notamment le détour qu'il devra effectuer et éventuellement un montant financier qu'il se verra attribuer. Suivant le dispositif de communication utilisé, il sera également possible d'envoyer au conducteur d'autres informations telles que la photographie du passager, ce qui lui permettra de l'identifier au moment de la prise en charge, ainsi que par exemple son prénom ou son nom, ce qui permet par exemple de reconnaître à l'avance un passager qui a déjà été pris en charge et éventuellement de refuser un passager indésirable. Pour indiquer que le conducteur accepte de prendre en charge le passager en question, le centre de gestion demande l'envoi d'un message de quittance. En cas d'acceptation, le centre de gestion envoie un message au conducteur et au passager, leur donnant les indications nécessaires pour fixer le rendez-vous. En cas de refus, le "deuxième meilleur conducteur" est sélectionné par le centre de gestion et le processus est reconduit jusqu'à ce qu'un seul conducteur soit trouvé pour un passager. Il est à noter que le lieu de rendez-vous n'est pas nécessairement la position actuelle du passager, mais que celui-ci peut devoir se déplacer jusqu'au point de départ du trajet.

Dans le cas où un groupe de cond ucteurs a été défini, le centre de gestion envoie un message personnel à chaque conducteur de ce groupe en donnant toutes les indications nécessaires permettant de fixer le rendez-vous. Le centre de gestion demande l'envoi d'un message de retour indiquant l'acceptation ou le refus d'effectuer le trajet. Ce processus est conduit jusqu'à ce qu'un seul conducteur soit trouvé pour un passager.

Selon un mode de réalisation simplifié, le passager qui souhaite faire un trajet en voiture envoie simplement un message au centre de gestion indiquant qu'il cherche une voiture, sans même indiquer sa destination. Ce message contient sa position donnée par les moyens de positionnement 14. Le centre de gestion reçoit régulièrement la position des conducteurs prêts à prendre en charge un passager. Lorsqu'un conducteur passe ou va passer, selon sa position actuelle et sa destination, à proximité d'un passager qui souhaite être véhiculé, le centre de gestion envoie un message au conducteur. Ce message peut par exemple être un signal sonore discontinu, avec un intervalle entre deux sons consécutifs dépendant de la distance entre le passager et le conducteur. Ce signal peut par exemple devenir continu lorsque le passager et le conducteur sont à quelques mètres l'un de l'autre. Dans ce cas, le conducteur peut demander sa destination au passager et le prendre en charge si cette destination "convient" au conducteur. Un montant peut être attribué au conducteur et prélevé du compte du passager. Ce montant peut être calculé en fonction de la distance parcourue, qui peut elle-même être déterminée automatiquement par le centre de gestion d'après la position du dispositif de communication du conducteur et du passager. Le début et la fin de la prise en charge du passager par le conducteur sont détectés automatiquement du fait que la distance entre les dispositifs de communication du conducteur et du passager est fixe et très faible.

Il est à noter qu'il est possible de déterminer la direction du passager par la connaissance de deux ou trois positions successives ou introduite par le passager, de sorte qu'un message indiquant qu'un passager est à prendre en charge peut n'être envoyé qu'aux conducteurs dont la direction concorde avec la direction du passager.

Comme mentionné précédemment, il est également possible de s'inscrire auprès du centre de gestion avant d'effectuer un trajet. Au moment de leur inscription, les utilisateurs doivent indiquer d'une part leur itinéraire, c'est-à-dire au moins le point de départ et le point d'arrivée, avec éventuellement, le parcours précis. D'autre part, ils doivent indiquer des informations temporelles, c'est-à-dire au moins la date et l'heure du départ. Ils doivent également indiquer s'ils sont conducteurs ou passagers, ainsi que d'éventuelles informations complémentaires comme le nombre de places disponibles ou autre.

Prenons de nouveau l'exemple d'un passager qui s'inscrit pour effectuer un trajet déterminé à une date définie.

Le centre de gestion cherche tout d'abord parmi les conducteurs ayant inscrit une offre, si l'une d'entre elles correspond à la demande du passager. Si par hasard c'est le cas, un message est envoyé au conducteur et au passager leur donnant toutes les informations nécessaires pour fixer un rendez-vous. Si ce n'est pas le cas, le centre de gestion détermine un groupe d'utilisateurs susceptible d'être concerné. Ceci peut notamment être fait en utilisant comme critère, le lieu de domicile ou de travail ou des données statistiques qui indiquent que tel conducteur se rend régulièrement à un endroit donné. Le groupe peut éventuellement être formé de tous les conducteurs adhérant au système. Lorsque le groupe est déterminé, un message est envoyé à tous les conducteurs de ce groupe en donnant les indications relatives au trajet. Un message en retour est envoyé au centre de gestion par le ou les conducteurs qui acceptent la prise en charge du passager. Le centre de gestion gère ensuite les communications entre le passager et les conducteurs jusqu'à ce qu'un conducteur soit trouvé pour un passager.

Comme dans le mode de réalisation précédent, il est également possible d'envoyer le message uniquement à un conducteur à la fois, en choisissant le conducteur le plus apte à faire le trajet demandé par le passager.

Lorsque le résultat de la requête est trouvé et qu'un conducteur et un passager ont reçu les indications nécessaires pour leur rendez-vous, le dispositif de communication peut envoyer, peu de temps avant l'heure fixée du rendez-vous, la position de chacun des deux utilisateurs au centre de gestion. Le centre de gestion traite cette information de position et l'envoie à l'autre utilisateur, en indiquant par exemple la distance qui les sépare. Ainsi, le conducteur et le passager peuvent facilement se trouver et chacun peut estimer le temps d'attente jusqu'au rendez-vous.

Lorsqu'un conducteur a pris en charge un passager, que ce soit sous forme "impulsive" ou avec inscription à l'avance, il envoie un message au centre de gestion. Ce message, comme précédemment, contient la position du véhicule et le fait que le passager est pris en charge. Lorsque le passager est arrivé à destination, le conducteur ou le passager envoie de nouveau un message indiquant la position du véhicule et le fait que le passager a terminé sa course. Pendant le trajet, il est possible de prévoir que le dispositif de communication envoie la position du véhicule à intervalles réguliers. Cela peut se faire sans aucune intervention du conducteur.

Le centre de gestion peut, grâce à ces messages, déterminer la distance parcourue et débiter un compte du passager et créditer un compte du conducteur, en prélevant par exemple une somme sur la transaction. De cette façon, il n'est pas nécessaire que le conducteur et le passager conviennent d'un tarif pour la course.

Il est également possible de prendre en compte le fait que le tarif varie en fonction de zones géographiques déterminées. Ainsi, un prix par kilomètre effectué peut être défini pour les trajets à l'intérieur d'une ville, un autre prix par kilomètre peut être défini pour les trajets sur les autoroutes, un montant déterminé peut être fixé pour un péage autoroutier ou comme taxe d'entrée dans un centre ville par exemple. Ces zones géographiques étant connues du centre de gestion grâce aux moyens de positionnement et à une base de données qui recense les zones géographiques en relation avec un montant, il n'est pas nécessaire au passager et au conducteur de négocier un prix entre eux. Ce prix peut également dépendre par exemple du type de véhicule utilisé.

Le centre de gestion peut mémoriser l'ensemble des trajets effectués. Ceci permet par exemple d'obtenir des informations statistiques qui peuvent être consultées par les utilisateurs. Ces statistiques permettent notamment de savoir quel est le temps moyen d'attente avant d'être pris en charge pour effectuer un trajet donné. Elles permettent également de savoir si le temps d'attente serait réduit ou augmenté en modifiant l'heure du voyage.

Ce système de covoiturage est particulièrement intéressant du fait que pour les utilisateurs, aussi bien les passagers que les conducteurs, ils n'induisent pratiquement aucune contrainte. Il demande une seule inscription au départ, puis l'envoi d'un message très simple au moment de l'utilisation du service. La grande majorité des trajets se fait de façon régulière et répétitive, de sorte qu'il suffit de mémoriser quelques destinations pour pouvoir les sélectionner ultérieurement. En dehors de ceci, les utilisateurs sont automatiquement informés lorsqu'une demande ou une offre les concerne.

La gestion administrative et le paiement ou la rétribution se font automatiquement, sans que les utilisateurs n'aient à s'en préoccuper.

En ce qui concerne les problèmes de sécurité, les conducteurs et les passagers sont clairement identifiés au moyen du numéro unique d'identification de leur dispositif de communication.

Le système selon la présente invention fournit un système de covoiturage efficace et fiable en supprimant les recherches fastidieuses et en assurant beaucoup plus de flexibilité que les systèmes de l'art antérieur. De plus, il gère les aspects financiers de façon automatique.

## Revendications

1. Système de covoiturage comportant un centre de gestion (10), au moins un dispositif de communication (11) attribué à un conducteur (12) et au moins un dispositif de communication (11) attribué à un passager (13), ces dispositifs de communication ayant un numéro unique d'identification et comportant des moyens de détermination (14) de leur position géographique, **caractérisé en ce que** les dispositifs de communication du passager et du conducteur comportent des moyens de transmission (15) audit centre de gestion d'au moins une position géographique et **en ce que** le centre de gestion comporte des moyens de sélection d'au moins un conducteur pour un passager.

2. Système de covoiturage selon la revendication 1, **caractérisé en ce que** le dispositif de communication (11) de l'utilisateur comporte en outre des moyens d'introduction d'une destination.

3. Système de covoiturage selon la revendication 1, **caractérisé en ce que** ladite position géographique est la position actuelle dudit dispositif de communication (11).

4. Système de covoiturage selon la revendication 1, **caractérisé en ce que** ladite position géographique est une position de départ du trajet de covoiturage.

5. Système de covoiturage selon la revendication 1, **caractérisé en ce que** lesdits moyens de transmission (15) sont agencés pour transmettre une date et une heure associée à ladite position géographique.

6. Système de covoiturage selon l'une des revendications 1 à 4, **caractérisé en ce que** le centre de gestion (10) contient une base de données "utilisateurs" (16) contenant le numéro unique d'identification du dispositif de communication de l'utilisateur, une base de données "conducteurs" (17) comportant au moins le numéro unique d'identification du dispositif de communication du conducteur acceptant de prendre en charge un passager et une base de données "passagers" (18) comportant au moins le numéro unique d'identification du dispositif de communication du passager souhaitant trouver un conducteur pour un trajet déterminé et **en ce que** la base de données "conducteurs" contient en outre la position géographique de chaque conducteur acceptant de prendre en charge un passager et **en ce que** la base de données "passagers" contient en outre la position géographique de chaque passager souhaitant trouver un conducteur pour un trajet déterminé.

7. Système selon la revendication 2, **caractérisé en ce qu'**il comporte une pluralité de cartes géographiques mémorisées et des moyens de calcul pour déterminer des itinéraires en fonction de la position actuelle de chaque utilisateur et de sa destination.

8. Système selon la revendication 1, **caractérisé en ce qu'**il comporte des moyens de communication de données agencés pour transmettre des informations du centre de gestion auxdits dispositifs de communications des utilisateurs.

9. Procédé de covoiturage dans lequel :
- un utilisateur s'inscrit auprès d'un centre de gestion (10) en indiquant un numéro unique d'identification d'un dispositif de communication (11) qui lui est lié;
- lorsqu'un passager (13) cherche un conducteur (12), il envoie un message audit centre de gestion, ce message contenant au moins une indication de position du passager et le numéro unique d'identification du dispositif de communication dudit passager;
- lorsqu'un conducteur accepte à prendre en charge un passager, il envoie un message audit centre de gestion, ce message contenant au moins une indication de position du conducteur et le numéro unique d'identification du dispositif de communication dudit conducteur,
- le centre de gestion détermine, pour le passager cherchant un conducteur, au moins un conducteur susceptible de prendre en charge un passager déterminé,
- le centre de gestion envoie un message au dispositif de communication du conducteur, ce message contenant au moins des indications d'une position géographique d'un lieu de rendez-vous.

10. Procédé selon la revendication 9, **caractérisé en ce que** ladite indication de position est la position géographique actuelle du dispositif de communication (11).

11. Procédé selon la revendication 9, **caractérisé en ce que** ladite indication de position est une position géographique sélectionnée par l'utilisateur.

12. Procédé selon la revendication 11, **caractérisé en ce que** ladite position géographique sélectionnée par l'utilisateur est associée à une date et une heure de rendez-vous.

13. Procédé selon la revendication 9, **caractérisé en ce que** :
- au moins un message envoyé par le dispositif de communication (11) d'un passager comprend en outre une indication de la destination de ce passager,
- au moins un message envoyé par le dispositif de communication (11) du conducteur comprend en outre une indication de la destination de ce conducteur, et
- pour un passager cherchant un conducteur, le centre de gestion (10) détermine, en fonction de la destination du conducteur et du passager, au moins un conducteur susceptible de prendre en charge ce passager,
- le centre de gestion envoie un message au dispositif de communication du conducteur, ce message contenant au moins des indications d'une position géographique d'un lieu de rendez-vous.

14. Procédé selon la revendication 9, **caractérisé en ce que** le conducteur prêt à prendre en charge un passager déterminé après avoir reçu un message du centre de gestion, renvoie au centre de gestion, un message de quittance indiquant qu'il accepte de prendre en charge ledit passager déterminé.

15. Procédé selon la revendication 14, **caractérisé en ce que** le centre de gestion détermine la distance entre le dispositif de communication dudit passager déterminé et du conducteur ayant renvoyé le message de quittance et **en ce qu'**au moins l'un des dispositifs de communication du passager ou du conducteur envoie un message de début de prise en charge lorsque la distance entre les deux dispositifs de communication est inférieure à une valeur fixe prédéfinie, et un message de fin de prise en charge lorsque cette distance est supérieure à ladite valeur fixe prédéfinie.

16. Procédé selon la revendication 9, **caractérisé en ce qu'**un montant est prélevé au passager et **en ce qu'**un montant est attribué au conducteur pour la prise en charge du passager par le conducteur.

17. Dispositif de communication portable (11) comportant des moyens de détermination (13) de la position géographique actuelle dudit dispositif et des moyens de transmission (15) de cette position à un centre de gestion, **caractérisé en ce qu'**il comporte en outre des moyens permettant d'introduire une destination et des moyens de transmission de cette destination audit centre de gestion.

18. Dispositif selon la revendication 17, **caractérisé en ce qu'**il comporte une mémoire agencée pour mémoriser au moins une destination.

19. Dispositif selon la revendication 17, **caractérisé en ce qu'**il comporte des moyens de réception (15) de messages provenant du centre de gestion.

20. Dispositif selon la revendication 17, **caractérisé en ce en ce qu**'il comporte des moyens d'indication de la proximité d'un autre dispositif de communication.
